# EUROPEAN PATENT APPLICATION

(11) **EP 3 330 839 A1**
(43) Date of publication of application: **06.06.2018**
(21) Application number: 16306618.6
(22) Date of filing: 05.12.2016
(51) Int. Cl.: G06F 3/01, G06F 3/0481, G06T 19/00, H04N 13/04, G02B 27/01

(54) **METHOD AND DEVICE FOR ADAPTING AN IMMERSIVE CONTENT TO THE FIELD OF VIEW OF A USER**

(71) Applicant: THOMSON Licensing, 92130 Issy-les-Moulineaux (FR)
(72) Inventor: BAILLARD, CAROLINE, 35576 CESSON SEVIGNE CEDEX (FR); ALLEAUME, VINCENT, 35576 CESSON SEVIGNE CEDEX (FR); LAURENT, ANTHONY, 35576 CESSON SEVIGNE CEDEX (FR)
(74) Representative: Merlet, Hugues

(57) **Abstract**

A method and a device for rendering a large field-of-view content (10) by obtaining an information representative of bounds of a field of view of a user (11) in a frame of reference of the user and adapting the rendering of the large field-of-view content according to the information representative of the bounds.

## Description

### 1. Technical field

The present disclosure relates to the domain of immersive image/video content (also called large field-of-view content). The present disclosure is also understood in the context of the adjusting of the content of the immersive image or video for example according to physiological limits of a viewer watching the immersive image/video content on an end-user device such as a mobile device or a Head-Mounted Display (HMD).

### 2. Background art

This section is intended to introduce the reader to various aspects of art, which may be related to various aspects of the present disclosure that are described and/or claimed below. This discussion is believed to be helpful in providing the reader with background information to facilitate a better understanding of the various aspects of the present invention. Accordingly, it should be understood that these statements are to be read in this light, and not as admissions of prior art.

Recently there has been a growth of available large field-of-view content (up to 360°). Such content is potentially n ot fully visible by a user watching the content on immersive display devices such as Head Mounted Displays (HMD), CAVE system or the like. That means that at a given moment, a user may only be viewing a part of the content. However, a user can typically navigate within the content by various means such as head movements. Depending on the content and for example on the location of point(s) or region(s) of interest within the large field-of-view content, this may lead to uncomfortable positions which may cause musculo-skeletal fatigue.

### 3. Summary

References in the specification to "one embodiment", "an embodiment", "an example embodiment", "a particular embodiment" indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

The present disclosure relates to a method of rendering a large field-of-view content, the method comprising:
- obtaining an information representative of bounds of a field of view of a user in a frame of reference of the user;
- adapting the rendering of said large field-of-view content according to the information.

The present disclosure also relates to a device configured to render a large field-of-view content, the device comprising a memory associated with at least one processor configured to:
- obtain an information representative of bounds of a field of view of a user in a frame of reference of the user;
- adapt the rendering of said large field-of-view content according to the information.

The present disclosure also relates to a device configured to render a large field-of-view content, the device comprising:
- means for obtaining an information representative of bounds of a field of view of a user in a frame of reference of the user;
- means for adapting the rendering of said large field-of-view content according to the information.

According to a particular characteristic, the information corresponds to at least an angle limit value according to at least an axis.

According to another characteristic, the obtaining comprises:
- rendering at least a message representative of an instruction of motion;
- determining a limit of the motion.

According to a specific characteristic, at least a message belongs to a group of messages comprising:
- a textual message;
- a sound message;
- a graphical message.

According to a particular characteristic, the obtaining comprising receiving the information from a memory device comprising user-specific information.

According to another characteristic, the adapting comprises determining a location of a virtual object within the large field-of-view content according to the information.

According to a particular characteristic, the adapted large field-of-view content is displayed on a display device.

The present disclosure also relates to a computer program product comprising program code instructions to execute the steps of the abovementioned method, when this program is executed on a computer.

The present disclosure also relates to a (non-transitory) processor readable medium having stored therein instructions for causing a processor to perform at least the abovementioned method.

### 4. List of figures

The present principles will be better understood, and other specific features and advantages will emerge upon reading the following description, the description making reference to the annexed drawings wherein:
- figures 1 A and 1B show a large field-of-view content, in accordance with an example of the present principles;
- figures 2, 3A and 3B show the field of view of a user watching at the large field-of-view content of figures 1 A and/or 1B, in accordance with examples of the present principles;
- figure 4 shows an equirectangular mapping function associated with the large field-of-view content of figures 1A and/or 1B, in accordance with examples of the present principles;
- figure 5 shows a layout of the cube mapping function associated with the large field-of-view content of figures 1A and/or 1B, in accordance with examples of the present principles;
- figure 6 shows an image of a graphical user interface that may be used to determine the bounds of the field of view of figures 2, 3A and/or 3B, in accordance with an example of the present principles;
- figure 7 shows the structure of an apparatus adapted to display the immersive content of figures 1 A and/or 1B, in accordance with an example of the present principles;
- figure 8 shows the structure of an apparatus adapted to implement the process of figure 6 and/or the method of figure 8, in accordance with an example of the present principles;
- figure 9 shows a method of rendering at least a part of the large field-of-view content of figures 1A and/or 1B, in accordance with a particular embodiment of the present principles.

### 5. Detailed description of embodiments

The subject matter is now described with reference to the drawings, wherein like reference numerals are used to refer to like elements throughout. In the following description, for purposes of explanation, numerous specific details are set forth in order to provide a thorough understanding of the subject matter. It can be evident, however, that subject matter embodiments can be practiced without these specific details.

The present principles will be described in reference to a particular embodiment of a method of rendering a large field-of-view content or part of it. The method comprises obtaining an information representative of the bounds (or part of the bounds) of the field of view that is accessible to a user in user's environment, i.e. in the frame of reference of the user. For example, the user may wear or held an immersive display device (e.g. a HMD or a tablet) to watch the large field-of-view content and be sat in a chair, which limits the rotation of the head of the user, at least according to the roll axis of the user's frame of reference, thus limiting the field of view that is accessible to the user. According to another example, the user may lay on a bed, such a situation limiting the movements of the head at least according to the pitch, roll and yaw axis of the user's frame of reference, thus limiting the field of view that is accessible to the user. The rendering of the large field-of-view content is adapted to the information representative of the bounds of the user's field of view, for example by locating the point(s) of interest of the large field-of-view content within the part of this large field-of-view content that is accessible to the user, i.e. that corresponds to the field of view of the user's environment located within the bounds obtained hereinbefore.

A large field-of-view content may be, among others, an immersive video representing a real scene for example, a three-dimension computer graphic imagery scene (3D CGI scene), a point cloud. Many terms might be used to design such immersive videos: Virtual Reality (VR), 360, panoramic, 4π steradians, immersive, omnidirectional or large field of view for example.

Adapting the rendering of the large field-of-view content enables for example to prevent potential muscular fatigue or potential musculo-skeletal disorders, for example by locating the point(s) of interest within the part of the large field-of-view content that is accessible to the user without going beyond the bounds of the accessible field of view of the user in his/her environment.

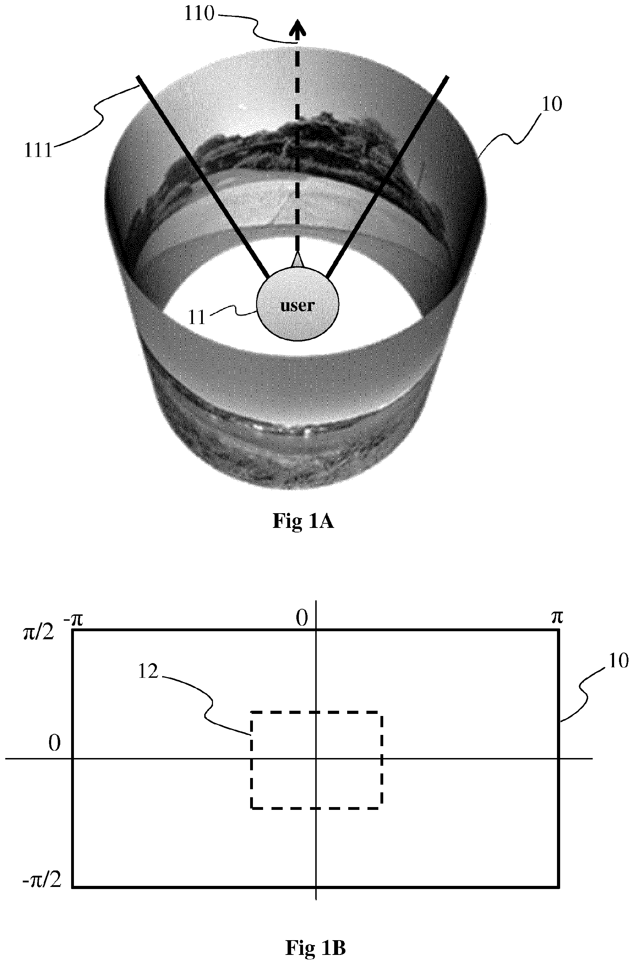

**Figures 1A** shows a user 11 immersed in a large field-of-view video content 10, e.g. a 4π steradian video content (or spherical video content), also called immersive content, according to a particular and non-limitative embodiment of the present principles.

**Figure 1** **A** illustrates a 3D representation example of the large field-of-view content. The large field-of-view content 10 corresponds for example to a real scene acquired with one or more cameras or to a virtual scene synthesized by using a 3D engine. According to a variant, the large field-of-view content 10 corresponds to a representation of a real scene including virtual object(s), i.e. a blending of real and virtual scenes. The large field-of-view content 10 corresponds for example to a real scene acquired with one or more cameras or to the combining / compositing of different elements of a real scene each acquired with one or more cameras. As illustrated in figure 1 A, the user 11 is watching at a part of the large field-of-view content according to a viewing direction 110, the viewing direction 110 corresponding to the main direction of the gaze of the user 11. A field of view 111 is associated with the viewing direction 110, the field of view 111 corresponding to a part only of the large field-of-view content 10. When the gaze direction of the user 11 changes, the part of the large field-of-view content seen by the user (and corresponding to the field of view) changes consequently. The user 11 may wander his/her gaze within the large field-of-view content by for example moving his/her head (or his/her body or a part of it) from left to right (or inversely) and/or from top to bottom (or inversely).

**Figure 1B** shows an example of the large field-of-view content 10, in the non-limiting exemplary form of a 4π steradian video content, according to a particular and non-limitative embodiment of the present principles. Figure 1B corresponds to a planar representation of the large field-of-view content 10. A part 12 of the large field-of-view content 10 corresponds for example to the part of the large field-of-view content displayed onto an immersive display device adapted to visualize immersive contents, the size of the part 12 being for example equal to the field of view provided by the immersive display device. The part displayed on the immersive display device may be called an image in the following description.

The immersive display device used to visualize the large field-of-view content 10 is for example a HMD (Head-Mounted Display), worn on the head of a user or as part of a helmet. The HMD advantageously comprises one or more display screens (for example LCD (Liquid Crystal Display), OLED (Organic Light-Emitting Diode) or LCOS (Liquid Crystal On Silicon)) and sensor(s) configured for measuring the change(s) of position of the HMD, for example gyroscopes or an IMU (Inertial Measurement Unit), according to one, two or three axes of the real world (pitch, yaw and/or roll axis). The part 12 of the large field-of-view content 10 corresponding to the measured position of the HMD is advantageously determined with a specific function establishing the relationship between the point of view associated with the HMD in the real world and the point of view of a virtual camera associated with the large field-of-view content 10. Controlling the part (i.e. the image) 12 of the video content to be displayed on the display screen(s) of the HMD according to the measured position of the HMD enables a user wearing the HMD to browse into the large field-of-view content, which is larger than the field of view associated with the display screen(s) of the HMD. For example, if the field of view offered by the HMD is equal to 110°(for example about the yaw axis) and if the large field-of-view content offers a content of 180°, the user wearing the HMD may rotate his/her head to the right or to the left to see the parts of the video content outside the field of view offered by the HMD. According to another example, the immersive system is a CAVE (Cave Automatic Virtual Environment) system, wherein the large field-of-view content is projected onto the walls of a room. The walls of the CAVE are for example made up of rear-projection screens or flat panel displays. The user may thus browse his/her gaze on the different walls of the room. The CAVE system is advantageously provided with cameras acquiring images of the user to determine by video processing of these images the gaze direction of the user. According to a variant, the gaze or the pose of the user is determined with a tracking system, for example an infrared tracking system, the user wearing infrared sensors. According to another variant, the immersive system is a tablet or a smartphone with a tactile display screen, the user browsing into the content by moving the tablet/smartphone, the displayed content changing according to the change of position of the tablet/smartphone.

The large field-of-view content 10 and the part 12 as well may comprise real objects and virtual objects, i.e. the scene represented by the large field-of-view content 10 is an augmented-reality scene mixing real and virtual elements. The real objects are part of a real scene that is acquired with an image acquisition device (e.g. a camera) and the virtual objects may be obtained from computer-generated imagery (CGI).

The large field-of-view content 10 and the part 12 as well may comprise foreground object(s) and background object(s). The background object(s) may be obtained for example from a first video representing the background of the large field-of-view content 10. The foreground object(s) may be obtained for example from one or more second videos each representing one or more of the foreground objects, the large field-of-view content being obtained by compositing of the first video with the second video(s).

According to another example, the large field-of-view content rendered and displayed on the immersive display device is obtained by overlaying one or more virtual objects that belongs to an immersive content on an image of a real scene that is for example acquired in real time with the camera of the immersive display device. According to this example, the immersive display device may be a tablet, the image of the real scene onto which is overlaid one or more virtual objects being acquired with the rear camera of the tablet. The image acquired with the rear camera is displayed on the screen of the tablet and a part of the immersive content is overlaid on or composited with the image to obtain an augmented reality (AR) image. A user holding the tablet may acquire several images of the real scene according to several points of view, virtual objects of the immersive content being added to the images according to the points of view of these images of the real scene.

According to a further example, the large field-of-view content rendered and displayed on the immersive display device is obtained by mixing a large field-of-view virtual content (also called large field-of-view CGI content) with images of a real scene acquired with a camera The pose of the camera used to acquire the images of the real scene is for example used to determine the corresponding pose of the virtual camera, to select a part of the large field-of-view virtual content scene corresponding to the image of the real scene to generate the augmented reality (or augmented virtuality) large field-of view content.

In some of the abovementioned examples, the large field-of-view rendered and/or displayed on the immersive display device is obtained by mixing part(s) of an immersive content with one or more images acquired with a standard camera, i.e. not immersive images.

Naturally, the large field-of-view content 10 is not limited to a 4π steradian video content but extends to any video content (or audio-visual content) having a size greater than the field of view 12. The large field-of-view content may be for example a 2π, 2.5 π, 3π steradian content and so on.

It is understood with a video or a video content a sequence of successive still images, the sequence comprising one or more still image(s). The large field-of-view content consequently comprises one or more successive image(s).

An immersive video is a video encoded on at least one rectangular image that is a two-dimension array of pixels (i.e. element of color information) like a "regular" video. To be rendered, the image is first mapped on the inner face of a convex volume, also called mapping surface (e.g. a sphere, a cube, a pyramid), and, second, a part of this volume is captured by a virtual camera. Images captured by the virtual camera are rendered on the screen of an immersive display device (e.g a HMD). A stereoscopic video is encoded on one or two rectangular images, projected on two mapping surfaces which are combined to be captured by two virtual cameras according to the characteristics of the device. Pixels are encoded according to a mapping function in the image. The mapping function depends on the mapping surface. For a same mapping surface, several mapping functions may be possible. For example, the faces of a cube may be structured according to different layouts within the image surface. A sphere may be mapped according to an equirectangular projection or to a gnomonic projection for example.

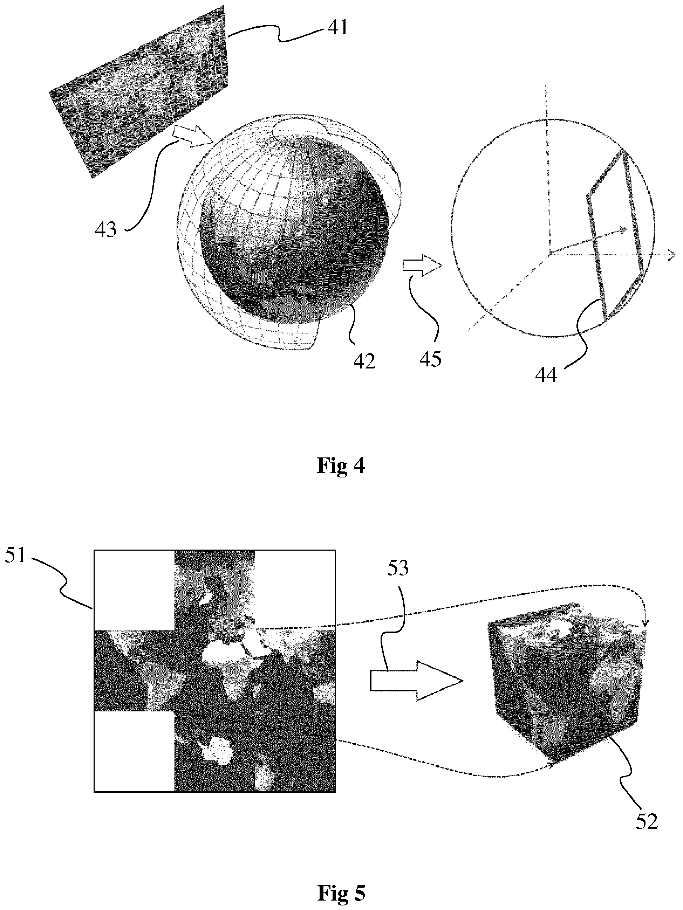

Figures 4 and 5 provide non-limiting examples of such mapping functions.

**Figure 4** shows an example of an equirectangular mapping function. The sequence of image(s) of an immersive video is encoded on a rectangular image 41 meant to be mapped on a spherical mapping surface 42. The mapping function 43 establishes a mapping between each pixel of the image 41 and a point on the mapping surface 42 (and vice versa). On figure 4, the mapping function 43 is based on the equirectangular projection (also called equidistant cylindrical projection). The image on the image 41 is distorted. The distances are respected at the equator and stretched at poles. Straight lines are no longer straight and perspectives are distorted. In variants, the mapping function 43 is based on the equidistant conic projection for instance. If the screen 44 is rectangular, as for head-mounted display devices (HMD) or tablets or smartphones, a part of the mapping surface 42 is selected. The projection function 45 consists in selecting a part of the mapping surface 42 as seen by a camera located at the center of the sphere, the camera being configured in terms of field of view and resolution in order to produce an image that directly fits with the screen 44. The chosen field of view depends on the characteristics of the immersive display device. For HMD for example, the angle of the field of view is close to the human stereoscopic vision field, which is around one hundred and twenty degrees. The aiming direction of the camera corresponds to the direction the user is looking toward and the virtual camera controller of the immersive video rendering device is used to modify the aiming direction of the camera. In a variant, the video of figure 4 is stereoscopic. In such a variant, the image 41 contains two distinct images which are mapped on two distinct mapping surfaces 42. The mapping surfaces are combined according to the type of the screen to render the stereoscopic effect.

**Figure 5** shows an example layout of the cube mapping function. The sequence of images is encoded on a rectangular (or square) image 51 meant to be mapped on a cubical mapping surface 52. The mapping function 53 establishes a correspondence between squares in the image 51 and faces of the cube 52. Vice versa, the mapping function determines how the faces of the cube 52 are organized within the surface of the image 51. Images on each face are not distorted. However, in the total image of the image 51, lines are piece-wise straight and perspectives are broken. The image may contain empty squares (filled with default or random color information, white on the example of figure 5). The projection function works as the projection function of figure 4. A camera is placed at the center of the cube 52 and captures an image that fits the screen of the immersive rendering device.

In variants, other mapping surfaces and/or mapping functions are used, mapping the video image on a cylinder or on a pyramid for instance.

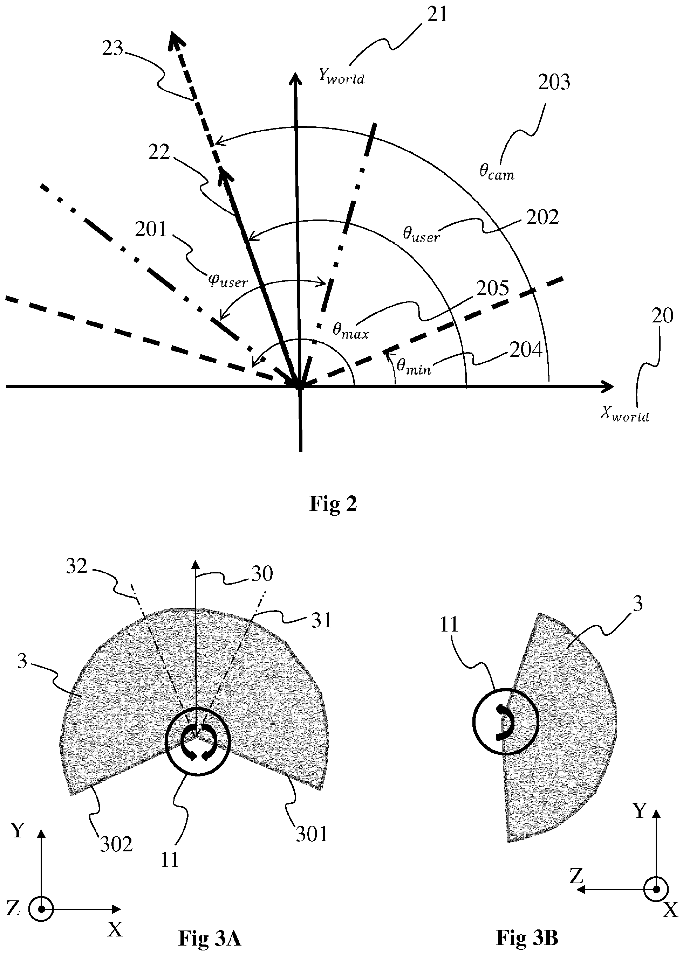

**Figure 2** shows the field of view that is accessible to the user in his/her environment (i.e. in the frame of reference of the user) as well as the angular portion of the large field-of-view content 10 the user is then able to look at, according to a non-limiting embodiment of the present principles.

For sake of clarity and conciseness, the non-limitative example of figure 2 considers the case of a horizontal planar motion of the immersive display device (displaying the large field-of-view content) worn by the user, for example about the yaw axis. Naturally, the present disclosure is not limited to this example and extends to any motion of the immersive display device in every plane defined by the three axis, i.e. the yaw, pitch and roll axis.

X_{world} 20 and Y_{world} 21 represent two axis of the world space and correspond for example to respectively the pitch axis and roll axis. The world space corresponds to the space in which a user wearing the display device moves, i.e. the user's environment that also corresponds to the frame of reference of the user who moves in his/her environment. The direction at which the user wearing the display device is looking is represented by the arrow 22 showed with a solid line. The angle θᵤₛₑᵣ 202 corresponding to the angle between the axis X_{world} 21 and the direction 22 defines a first position of the display device. The angle ϕᵤₛₑᵣ 201 corresponds to the current user's field of view and corresponds advantageously to the field of view offered by and associated with the display device, for example 110°, 120° or 130°. This angle ϕᵤₛₑᵣ 201 is advantageously centred on the direction 22 and extends equally on both sides of the direction 22. A first part of the video content is advantageously displayed on the display device, the "width" of this first part being defined by the field of view ϕᵤₛₑᵣ 201. This first part corresponds to a spatial portion of the video content that is determined according to the first position θᵤₛₑᵣ 202 of the display device. This first part corresponds advantageously to a first point of view of a camera associated with the video content, the first point of view being illustrated with the arrow 23 showed with a dash line. The first point of view is advantageously defined with the angle θ_{cam} 203 corresponding to the angle between the axis X_{world} 21 and the direction associated with the arrow 23. The first point of view is advantageously determined with a mapping function establishing the relationship between the position of the display device in the user's frame of reference and the position of the camera associated with the video content. This mapping function presents advantageously different behaviours according to the position of the display device in the user's frame of reference.

The range defined with the angles θₘᵢₙ 204 and θₘₐₓ 205 corresponds to the field of view that is accessible by the user in his/her environment. The field of view that is accessible by the user corresponds for example to the part of the environment of the user that may be seen by the user standing or laying or sitting in a fixed position, including the parts of the environment that the user sees when he/she rotates his/her head. θₘᵢₙ 204 and θₘₐₓ 205 may be used as parameters to define the bounds of the field of view that is accessible to the user. θₘᵢₙ 204 corresponds for example to the minimal angle value of the field of view accessible to the user and θₘₐₓ 205 to the maximal angle value of the field of view accessible to the user. A corresponding part of the large field-of-view may be determined via the mapping function, the thus determined corresponding part being the part of the large field-of-view that the user is able to watch, i.e. the part of the large field-of-view content the user is able to browse into.

The bounds (or limits) of the field of view of the user in his/her environment are for example due to the position of the user (for example sat in a chair, laid on a bed) and/or to physiological constraints specific to the user (e.g. mobility of the head and/or of the torso).

**Figures 3A and 3B** show the field of view 3 accessible to the user 11 in the user's frame of reference, according to non-limiting examples of the present principles.

The frame of reference of the user is defined by an orthonormal space that is represented with 3 axis X, Y and Z corresponding to the roll, pitch and yaw axis respectively. The visual field of the user 11 corresponds to the area of the environment of the user 11 that is comprised between the lines 31 and 32, the main visualization direction associated with the visual field being illustrated with the arrow 30. By rotating his/her head, the user 11 changes his/her main visualization direction and the associated visual field. The field of view accessible to the user 11 gathers all visual fields the user can see by rotating his/her head and/or other parts of his/her body in a given position. The field of view 3 accessible to the user 11 in his/her environment is illustrated with a greyed area, the bounding of this area according to the Z axis being referenced 301 and 302.

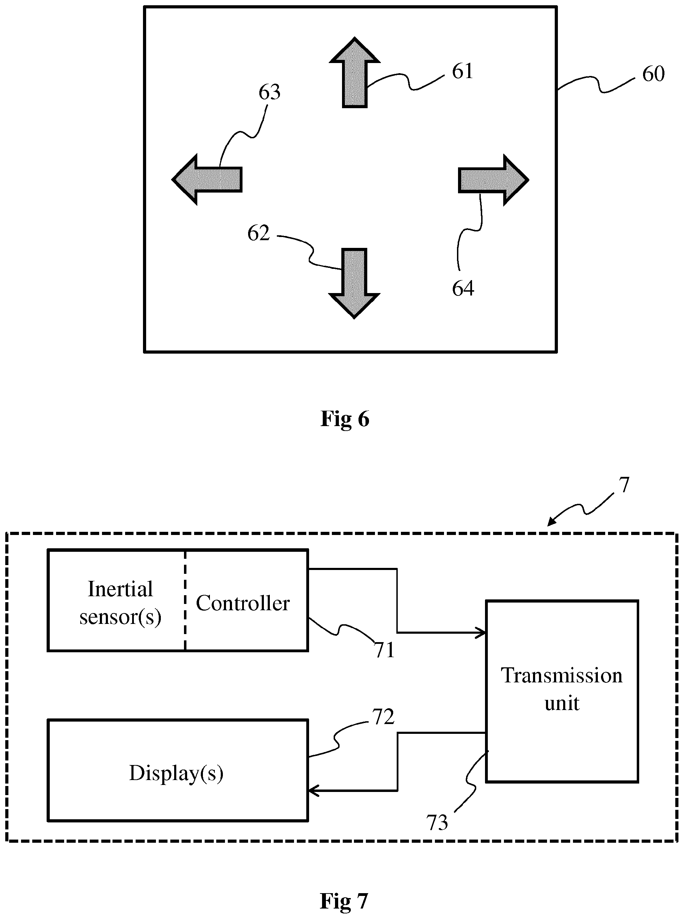

**Figure 6** shows an image of a graphical user interface that may be used to determine the bounds of the field of view accessible to the user illustrated with figures 2, 3A and/or 3B, according to a non-limiting embodiment of the present principles.

To determine the bounds or part of the bounds of the field of view that is accessible to the user in his/her environment, instructions may be provided to the user with regard to movements the user needs to do in some directions during a calibration process.

In an optional first operation, the user may for example be asked to start the process in a determined position, e.g. the user is instructed to look straight in front of him/her. To reach that aim, a first image may be displayed on the immersive display device (e.g. a HMD or a tablet or a smartphone) with a textual message instructing the user to look straight ahead according to the horizontal and vertical plane of the user's frame of reference. According to a variant, the first image comprises a representation of a person having the required position to show to the user which position he/she has to reproduce.

In a second operation, a second image 60 may then be displayed instructing the user to turn his head in a determined direction (e.g. to the right, to the left, upward or downward). The second image 60 comprises for example graphical elements 61 to 64, for example arrows 61 to 64. When the user is required to turn his/her head to the left, the arrow 63 may be displayed (the other arrows 61, 62 and 64 being not displayed). According to a variant, the arrows 61 to 64 are always displayed with an original color and the arrow 63 is displayed with a different color when the user is required to turn the head on the left. According to another variant, the arrow may start flashing to provide the user the instruction to turn the head to the left. According to a variant, the second image 60 may comprise a graphical representation of a person moving the head on the direction the user is required to turn his/her head. The user follows the instruction until reaching the limit of the movement he/she is asked to do.

The different positions taken by the immersive display device are for example determined and stored in a memory device. The different positions may be represented with angle values in the frame of reference of the user or with coordinates (x, y, z) in the frame of reference of the user. The information representative of a position of the immersive display device may be obtained directly from the immersive display device, for example from the IMU (Inertial Measurement Unit) of the immersive display device. According to a variant, the information representative of the position (location) of the immersive display device within the user's frame of reference may be obtained via an external tracking system, e.g. an external infrared camera tracking infrared emitters embedded into or on the immersive display device. According to another variant, the information representative of the position (location) of the immersive display device within the user's frame of reference may be obtained by using computer vision techniques, i.e. by analyzing an image of the environment of the user wearing/holding the immersive display device.

According to a variant, only the position of the immersive display device at the limit/bound of the field of view accessible to the user is determined and stored. According to this variant, the position information of the immersive display device is not determined as long as the position changes over time. The position of the immersive display device is for example only determined when the immersive display device is in a rest position, for example when no movement is detected after a determined time, e.g. after a few milliseconds or after 1 second for example.

The second operation may be reiterated for different directions: to the left then to the right (or inversely) to determine the bounds of the accessible field of view around the Z (Yaw) axis of the user's frame of reference; and/or upward and downward to determine the bounds of the accessible field of view around the Y (Pitch) axis of the user's frame of reference; and/or to the left then to the right (or inversely) to determine the bounds of the accessible field of view around the X (Roll) axis of the user's frame of reference.

According to another variant, the user may be required to move his/her head in a same direction several times to obtain a plurality of limit values according to a given direction to increase the reliability of the determination of the bound of the accessible field of view according to said given direction.

Naturally, the user interface used to provide the user with instructions is not limited to a graphical user interface with images comprising graphical objects (or messages) and/or textual objects (or messages) but extends to any user interface, for example audio user interface with instructions corresponding to audio or sound messages (for example a vocal message indicating the direction the user has to follow).

**Figure 7** diagrammatically shows a hardware embodiment of an immersive display device 7 configured for displaying a large field-of-view video content, the content of which varying at least in part according to the position of the immersive display device 7. The immersive display device 7 corresponds for example to a HMD. The immersive display device 7 comprises at least one inertial sensor 71, at least one display unit (for example a LCD (Liquid Crystal Display), OLED (Organic Light-Emitting Diode) or LCOS (Liquid Crystal On Silicon)) 72 and a transmission unit 73. The inertial sensor 71 corresponds for example to a gyroscope and the immersive display device 7 comprises for example three gyroscopes, one for the pitch, one for the roll and one for yaw. According to another example, the inertial sensor 71 corresponds to an IMU (Inertial Measurement Unit). A controller may be associated with the inertial sensor, the controller being configured to process the data representative of change of position of the device acquired by the inertial sensor and to transmit this data to the transmission unit 73 via a first bus. The transmission unit 73 is for example a wireless interface and is configured to transmit the data received from the inertial sensor 71 to an external device (not shown) via a wireless link (for example according to Wi-Fi or Bluetooth). The external device is for example a Set-Top Box (STB), a computer or any device adapted to store and/or compose and/or decode video content(s). The transmission may be further configured to receive data, via the wireless link, representative of the image(s) 10 of the video content to be displayed on the display unit(s) 72, for example from the external device. The data representative of the image(s) 10 to be displayed are then transmitted to the display unit(s) 72 via a second bus. According to a variant, the transmission unit is an interface configured to transmit/receive data via a wired link, for example according to USB or HDMI standard. The external device may transmit to the HMD the part of the video content corresponding to the measured position of the HMD. The part of the video content corresponding to the measured position of the HMD is for example determined with a specific function establishing the relationship between the point of view associated with the HMD in the real world and the point of view of a virtual camera associated with the video content. Controlling the parts of the video content to be displayed on the display screen(s) of the immersive display device according to the measured position of the immersive display device enables a user wearing the immersive display device to browse into the video content, especially when the video content is larger than the field of view associated with the display screen(s) of the immersive display device. For example, if the field of view offered by the immersive display device, i.e. a HMD, is equal to 110° (for example about the yaw axis) and if the vi deo content offers a content of 180°, the user wearing the HMD may rotate his/he r head to the right or to the left to see the parts of the video content outside the field of view offered by the HMD.

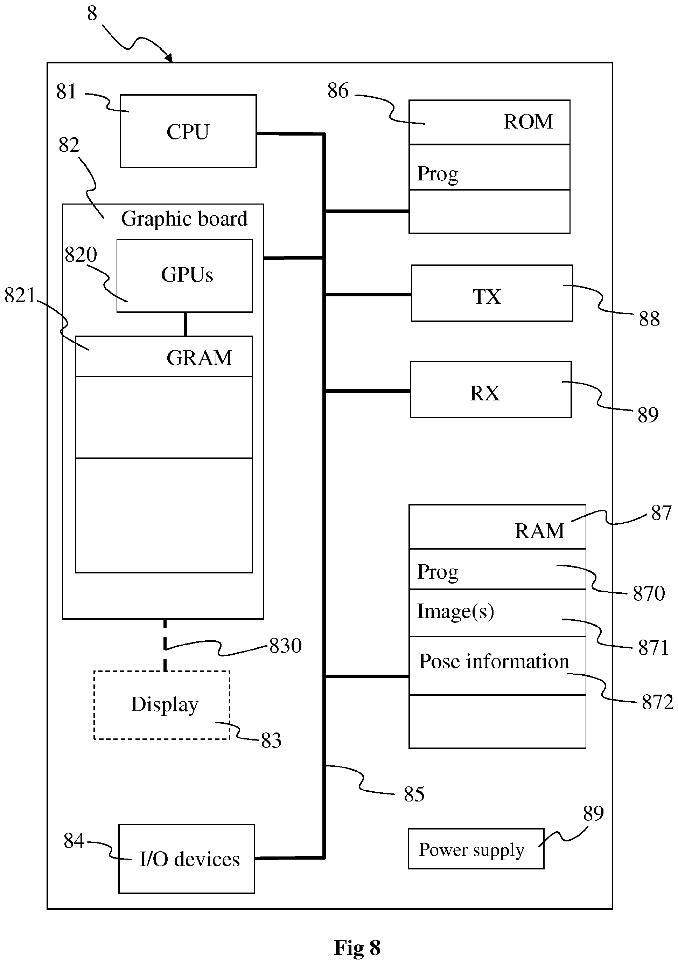

**Figure 8** diagrammatically shows a hardware embodiment of an apparatus 8 configured for compositing and/or transmitting an image. The apparatus 8 is also configured for the creation of display signals of one or several images. The apparatus 8 corresponds for example to a tablet, a Smartphone, a games console, a computer, a laptop or a Set-top box and/or may be a component of the immersive display device 7.

The apparatus 8 comprises the following elements, connected to each other by a bus 85 of addresses and data that also transports a clock signal:
- a microprocessor 81 (or CPU),
- a graphics card 82 comprising:
   - several Graphical Processor Units (or GPUs) 820,
   - a Graphical Random Access Memory (GRAM) 821,
- a non-volatile memory of ROM (Read Only Memory) type 86,
- a Random Access Memory or RAM 87,
- a transmitter 88 configured to transmit data representative of the images,
- a receiver 89 configured to receive data from the immersive display device (e.g. information representative of a visualization direction), from acquisition device(s), data representative of images;
- one or several I/O (Input/Output) devices 84 such as for example a tactile interface, a mouse, a webcam, etc. and
- a power source 89.

The apparatus 8 may also comprise one or more display devices 83 of display screen type directly connected to the graphics card 82 to display images calculated in the graphics card, for example live. The use of a dedicated bus to connect the display device 83 to the graphics card 82 offers the advantage of having much greater data transmission bitrates and thus reducing the latency time for the displaying of images composed by the graphics card. According to a variant, a display device is external to the apparatus 8 and is connected to the apparatus 8 by a cable or wirelessly for transmitting the display signals. The apparatus 8, for example the graphics card 82, comprises an interface for transmission or connection (not shown in figure 8) adapted to transmit a display signal to an external display means such as for example the first display device (e.g. an HMD), a LCD or plasma screen or a video-projector.

It is noted that the word "register" used in the description of memories 821, 86, and 87 designates in each of the memories mentioned, both a memory zone of low capacity (some binary data) as well as a memory zone of large capacity (enabling a whole program to be stored or all or part of the data representative of data calculated or to be displayed).

When switched-on, the microprocessor 81 loads and executes the instructions of the program contained in the RAM 87.

The random access memory 87 notably comprises:
- in a register 870, the operating program of the microprocessor 81 responsible for switching on the apparatus 8,
- data 871 representative of image(s) (for example RGB data),
- information 872 representative of the position (and/or of the pose) of the immersive display device.

The algorithms implementing the steps of the method(s) specific to the present disclosure (e.g. the method of transmitting a first image and/or the method of compositing the first image) are stored in the memory GRAM 821 of the graphics card 82 associated with the apparatus 8 implementing these steps. When switched on and once the data 871 and the information 872 are loaded into the RAM 87, the graphic processors 820 of the graphics card 82 load these parameters into the GRAM 821 and execute the instructions of these algorithms in the form of microprograms of "shader" type using HLSL (High Level Shader Language) language or GLSL (OpenGL Shading Language) for example.

The random access memory GRAM 821 notably comprises:
- in a register, data representative of the images;
- in a register, data representative of the position or pose information.

According to another variant, a part of the RAM 87 is assigned by the CPU 81 for storage of the identifiers and the distances if the memory storage space available in GRAM 821 is insufficient. This variant however causes greater latency time in the composition of an image comprising a representation of the environment composed from microprograms contained in the GPUs as the data must be transmitted from the graphics card to the random access memory 87 passing by the bus 85 for which the transmission capacities are generally inferior to those available in the graphics card for transmission of data from the GPUs to the GRAM and vice-versa.

According to another variant, the power supply 88 is external to the apparatus 8.

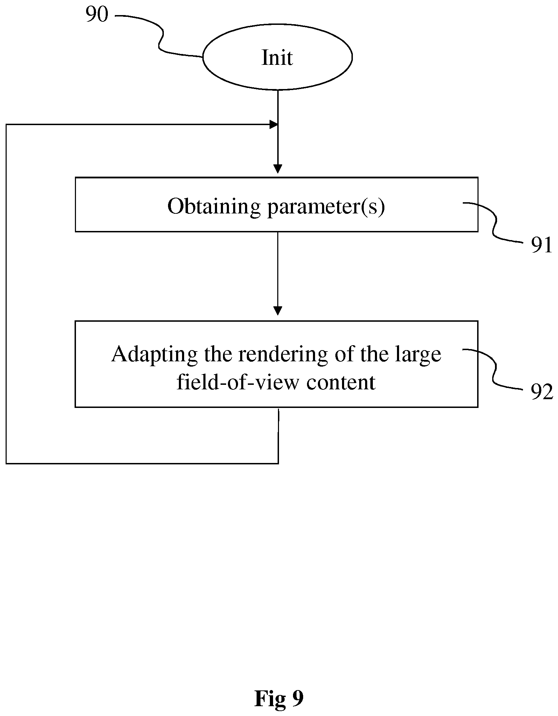

In an alternate embodiment, the apparatus 8 does not include any ROM but only RAM, the algorithms implementing the steps of the method specific to the present disclosure and described with regard to figure 9 being stored in the RAM. According to another variant, the apparatus 8 comprises a SSD (Solid-State Drive) memory instead of the ROM and/or the RAM.

**Figure 9** shows a method of rendering a large field-of-view content, according to a non-limiting embodiment of the present principles. The method is for example implemented in the apparatus 8 or in the immersive display device 7.

In a step 90, the different parameters of the apparatus 8 are updated. In particular, the parameters representative of the bounds of the accessible field of view are initialised in any way.

In a step 91, information representative of the bounds or part of the bounds of a field of view of a user in the user's frame of reference is obtained. The information is for example represented with a set of parameters representing limit angle values according to one or more axis of the frame of reference of the user. The frame of reference of the user may be defined with an orthogonal spatial system of 3 axis, namely X, Y and Z axis corresponding respectively to the Roll, Pitch and Yaw axis. The field of view accessible to the user may be defined with a range of angular values, i.e. angular values comprised between a minimal angle value and a maximal angle value, around a given axis (the minimal and maximal angle values forming the bounds of the field of view around the given axis). The information representative of the bounds or part of the bounds may for example take the form of two limit angle values (minimal and maximal) per axis, i.e. 2, 4 or 6 limit angle values. The field of view may for example be defined only around the Yaw axis, or only around the Yaw and Pitch axis or around the three axis of the user's frame of reference.

According to a first example, the information is obtained, i.e. received, from a storage device, e.g. a local memory device, e.g. RAM, GRAM and/or SSD of the apparatus 8, or from a remote memory device/entity, such as a server or the cloud. According to this first example, a given user using the immersive display device to watch a large field-of-view content may for example identify himself/herself to retrieve the information representative of the bounds of his/her specific field of view from the storage device. According to this first example, the storage device may for example comprise a LUT (look-Up-Table) associating information representative of the bounds with each identifier of one or more users. The information associated with a user may for example be obtained from anatomical data, as described for example in "General Anatomy and Musculoskeletal System" by M. Schuenke, E. Schulte, U. Schumacher, L. M. Ross, E. D. Lamperti and M. Voll (Thieme Medical Publishers Inc., 2010), for example according to the profile of the user (e.g. age, size, weight, gender) or from a calibration process as the one described with regard to figure 6.

According to a second example, the information is obtained, i.e. determined or measured, from a calibration process such as the one described with regard to figure 6, by rendering one or more instructions (either textual, graphical and/or audio messages) the user has to follow. During the calibration process, the field of view accessible to the user in his/her environment is determined, i.e. the field of view that the user can easily observe during the experience. In order to determine the field of view, the user is asked to watch through or at the immersive display device according to a set of possible directions in a relaxed manner, in such a way that the rotation induced to parts of his/her body respects physiological constraints due to his/her position and/or his/her body physiological limitations. The different positions of the immersive display device may be obtained using the internal sensors of the immersive display device or via any tracking technique. The field of view may be for example determined according to 1, 2 or 3 axis of the frame of reference. As a non-limiting example, the field of view is determined according to 2 axis, i.e. the pitch and yaw axis. To reach that aim, the motion of a part (e.g. the head of the user wearing a HMD or arms holding a tablet) of the body of the user may be characterized with 2 angles:
- α, characterizing the in-plane rotation, when the user observes the world (i.e. his/her environment) on the left and on the right, i.e. around the yaw axis;
- β, characterizing the off-plane rotation, when the user looks up and down, i.e. around the pitch axis.
A possible range [αmin, αmax] is determined for α, out of which the user cannot easily see his/her environment. Then for each value of α, a possible range [βmin (α),βmax (α)] is determined for β. In general, the range [βmin (α),βmax (α)] is maximal for α=0 (user looking in front of him/her), then the β range decreases when α alpha increases or decreases (user looking right or left). The values of αmin, αmax, βmin, βmax may for example be obtained as follow, assuming the user wears a headset. First the user looks straight in front of him then turns his head to the right, then to the left, until he reaches the most extreme positions. All the orientation parameters provided by the immersive display device are recorded during the sequence, and the minimal and maximal values for α are extracted, providing a user-specific solution for [αmin, αmax]. Second the user looks left, then slowly looks up, moving his head into a half-circle until he reaches the final position in the circle at the extreme right. Again, all the orientation parameters of the immersive display devices are recorded during the sequence, and for every value of α, the maximal value of β is recorded, providing a user-specific sampled solution for βmax(α). The same operation is repeated, this time looking down, providing a sampled solution for βmin(α). The whole process can be repeated several times for more reliability. If the user uses a tablet, the same process applies.

In a step 92, the rendering of the large field-of-view content is adapted/adjusted according to the information obtained at step 91. Knowing the field of view that is accessible to the user in his/her environment, the corresponding part of the large field-of-view that may be seen by the user is implicitly determined via the mapping function. The rendering of the large field-of-view content may then be adapted to what the user is able to see.

For example, if an object (e.g. a virtual object) or an event is inserted in the scene represented in the large field-of-view content, then a value for α may be chosen from the range [αmin, αmax], and a value for β may be chosen from the range [βmin(α),βmax(α)]. The object position and/or the event position may also be converted into (X,Y,Z) coordinates if required.

According to another example, at thresholding or scaling the event or object coordinates may be additionally threshold or scaled. For instance, let assume the location of a virtual object in the 3D environment is set in a standard manner, as (X,Y,Z) 3D coordinates. As the user position and orientation are known thanks to the tracking solution (e.g. the tracking of the HMD worn by the user), these coordinates may be converted as Cartesian coordinates in the user frame of reference, then to angular coordinates (α,β,d), where α and β are the two angles for in-plane and off-plane rotations, and d is the distance to the user. The value of α and β may be scaled or cropped, leading to new angle values α' in and β' located inside the possible range of angles, then converted back into 3D coordinates (X',Y',Z').

According to a further variant, the scale and/or the point of view of the event (i.e. the event may be rotated according to one or more determined angles) may be adapted according to the information obtained at step 91.

According to a further variant, an image of the adapted large field-of-view content is displayed on the screen(s) of the immersive display device.

According to a further variant, the eye gaze may be additionally taken into account as extending the field of view accessible to the user when adapting the large field-of-view content by locating the event(s) and/or object(s) in the part of the large field-of-view content the user is able to see. This additional range may be determined or obtained from generic physiological studies, or from an eye gaze tracking system associated with or embedded into the immersive display device.

Naturally, the present disclosure is not limited to the embodiments previously described.

In particular, the present disclosure is not limited to a method and device for rendering a large field-of-view content but also extends to a method for displaying one or more images of the adapted large field-of-view content, and to any device implementing this method and notably any devices comprising at least one CPU and/or at least one GPU.

The present disclosure also relates to a method (and a device configured) for obtaining/generating images of a large field-of-view content comprising points of interest located in a part accessible to the gaze of the user.

The present disclosure also relates to a method (and a device configured) for receiving the data representative of the adapted large field-of-view content, for example data received by the immersive display device 7 from the apparatus 8.

The implementations described herein may be implemented in, for example, a method or a process, an apparatus, a computer program product, a data stream, or a signal. Even if only discussed in the context of a single form of implementation (for example, discussed only as a method or a device), the implementation of features discussed may also be implemented in other forms (for example a program). An apparatus may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device. Processors also include communication devices, such as, for example, Smartphones, tablets, computers, mobile phones, portable/personal digital assistants ("PDAs"), and other devices that facilitate communication of information between end-users.

Implementations of the various processes and features described herein may be embodied in a variety of different equipment or applications, particularly, for example, equipment or applications associated with data encoding, data decoding, view generation, texture processing, and other processing of images and related texture information and/or depth information. Examples of such equipment include an encoder, a decoder, a post-processor processing output from a decoder, a pre-processor providing input to an encoder, a video coder, a video decoder, a video codec, a web server, a set-top box, a laptop, a personal computer, a cell phone, a PDA, and other communication devices. As should be clear, the equipment may be mobile and even installed in a mobile vehicle.

Additionally, the methods may be implemented by instructions being performed by a processor, and such instructions (and/or data values produced by an implementation) may be stored on a processor-readable medium such as, for example, an integrated circuit, a software carrier or other storage device such as, for example, a hard disk, a compact diskette ("CD"), an optical disc (such as, for example, a DVD, often referred to as a digital versatile disc or a digital video disc), a random access memory ("RAM"), or a read-only memory ("ROM"). The instructions may form an application program tangibly embodied on a processor-readable medium. Instructions may be, for example, in hardware, firmware, software, or a combination. Instructions may be found in, for example, an operating system, a separate application, or a combination of the two. A processor may be characterized, therefore, as, for example, both a device configured to carry out a process and a device that includes a processor-readable medium (such as a storage device) having instructions for carrying out a process. Further, a processor-readable medium may store, in addition to or in lieu of instructions, data values produced by an implementation.

As will be evident to one of skill in the art, implementations may produce a variety of signals formatted to carry information that may be, for example, stored or transmitted. The information may include, for example, instructions for performing a method, or data produced by one of the described implementations. For example, a signal may be formatted to carry as data the rules for writing or reading the syntax of a described embodiment, or to carry as data the actual syntax-values written by a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

A number of implementations have been described. Nevertheless, it will be understood that various modifications may be made. For example, elements of different implementations may be combined, supplemented, modified, or removed to produce other implementations. Additionally, one of ordinary skill will understand that other structures and processes may be substituted for those disclosed and the resulting implementations will perform at least substantially the same function(s), in at least substantially the same way(s), to achieve at least substantially the same result(s) as the implementations disclosed. Accordingly, these and other implementations are contemplated by this application.

## Claims

1. A method of rendering a large field-of-view content (10), the method comprising:
- obtaining (91) an information representative of bounds (301, 302) of a field of view of a user (11) in a frame of reference of the user;
- adapting (92) the rendering of said large field-of-view content according to said information.

2. The method according to claim 1, wherein said information corresponds to at least an angle limit value according to at least an axis.

3. The method according to one of claims 1 to 2, wherein the obtaining comprises:
- rendering at least a message (61 to 64) representative of an instruction of motion;
- determining a limit of said motion.

4. The method according to claim 3, wherein said at least a message belongs to a group of messages comprising:
- a textual message;
- a sound message;
- a graphical message.

5. The method according to one of claims 1 to 2, wherein the obtaining comprising receiving said information from a memory device comprising user-specific information.

6. The method according to one of claims 1 to 5, wherein the adapting comprises determining a location of a virtual object within said large field-of-view content according to said information.

7. The method according to one of claims 1 to 6, further comprising displaying the adapted large field-of-view content.

8. A device (8) configured to render a large field-of-view content, the device comprising a memory (87) associated with at least one processor (81) configured to:
- obtain an information representative of bounds of a field of view of a user in a frame of reference of the user;
- adapt the rendering of said large field-of-view content according to said information.

9. The device according to claim 1, wherein said information corresponds to at least an angle limit value according to at least an axis.

10. The device according to one of claims 8 to 9, wherein the at least one processor is further configured to render at least a message representative of an instruction of motion and determine a limit of said motion to obtain said information.

11. The device according to claim 10, wherein said at least a message belongs to a group of messages comprising:
- a textual message;
- a sound message;
- a graphical message.

12. The device according to one of claims 8 to 9, wherein the at least one processor is further configured to receive said information from a memory device comprising user-specific information to obtain said information.

13. The device according to one of claims 8 to 12, wherein the at least one processor is further configured to determine a location of a virtual object within said large field-of-view content according to said information to adapt the rendering

14. The device according to one of claims 8 to 13, further comprising a screen configured to display the adapted large field-of-view content.

15. A non-transitory processor readable medium having stored therein instructions for causing a processor to perform at least the steps of the method according to one of claims 1 to 7.
